# EUROPEAN PATENT APPLICATION

(11) **EP 4 852 408 A1**
(43) Date of publication of application: **09.12.2026**
(21) Application number: 26174395.9
(22) Date of filing: 24.04.2026
(51) Int. Cl.: H04L 67/12, H04L 69/08, H04L 69/18

(54) **COMMUNICATION METHOD, SYSTEM, AND RELATED DEVICE**

(30) Priority: 03.06.2025 CN 202510735201
(71) Applicant: Amlogic (Shanghai) Co., Ltd, Shanghai 201203 (CN)
(72) Inventor: XIAO, Yu, Shanghai (CN); XIAO, Pengfei, Shanghai (CN); SU, Rui, Shanghai (CN)
(74) Representative: Maiwald GmbH

(57) **Abstract**

A communication method, system, and related device are disclosed. A communication device includes: a protocol layer including a plurality of sub-protocol layers, configured to respectively generate an Internet Protocol (IP) protocol data unit based on a corresponding low-data-rate wireless communication protocol among a plurality of low-data-rate wireless communication protocols, and transmit the IP protocol data unit; a Medium Access Control (MAC) layer including a MAC transmission layer and a plurality of MAC sublayers arranged in one-to-one correspondence with the plurality of sub-protocol layers, configured to respectively perform conversion and transmission between the IP protocol data unit and a MAC protocol data unit based on a corresponding low-data-rate wireless communication protocol among the plurality of low-rate wireless communication protocols; and a physical layer, configured to perform conversion and transmission between the MAC protocol data unit and a physical layer protocol data unit based on a corresponding low-rate wireless communication protocol among the plurality of low-rate wireless communication protocols. The technical solution of the present disclosure enables the coexistence of multiple short-range low-data-rate wireless communication networks.

## Description

### CROSS-REFERENCE TO RELATED APPLICATIONS

This application claims priority to Chinese Patent Application No. 202510735201.4, filed on June 3, 2025, the entire disclosure of which is incorporated herein by reference.

### TECHNICAL FIELD

The present disclosure relates to the technical field of communications, and in particular, to a communication method, a communication system and a related device.

### BACKGROUND

The proliferation of networks, particularly in the 2.4 GHz band, including low-power, low-data-rate (LPDR) wireless communication networks such as Zigbee, Thread, and Bluetooth Low Energy (BLE), as well as Wireless Fidelity (WiFi) with its much higher transmission power levels, all operate in the 2.4 GHz spectrum. This poses a challenge to leveraging multiple network protocols.

In low-power, low-data-rate (LPDR) wireless communication networks, devices in the low-power network protocol can be divided into central devices and terminal devices based on their roles. The central device acts as a gateway, selecting channels to construct the low-power, low-data-rate (LPDR) wireless communication networks, while the terminal devices request to join the short-range, low-data-rate wireless communication network constructed by the central device.

However, current communication device cannot achieve the coexistence of multiple short-range, low-data-rate wireless communication networks.

### SUMMARY

The problem solved by the embodiments of the present disclosure is to provide a communication method, a communication system and a related device that can enable the coexistence of multiple short-range, low-data-rate wireless communication networks.

To address the above problems, embodiments of the present disclosure provide a communication device, comprising:
a protocol layer including a plurality of sub-protocol layers, configured to respectively generate an Internet Protocol (IP) protocol data unit based on a corresponding low-data-rate wireless communication protocol among a plurality of low-data-rate wireless communication protocols, and transmit the IP protocol data unit;
a Medium Access Control (MAC) layer including a MAC transmission layer and a plurality of MAC sublayers arranged in one-to-one correspondence with the plurality of sub-protocol layers, configured to respectively perform conversion and transmission between the IP protocol data unit and a MAC protocol data unit based on a corresponding low-data-rate wireless communication protocol among the plurality of low-rate wireless communication protocols; and
a physical layer, configured to perform conversion and transmission between the MAC protocol data unit and a physical layer protocol data unit based on a corresponding low-rate wireless communication protocol among the plurality of low-rate wireless communication protocols.

Optionally, the communication device comprises an application processor and a control processor, wherein the protocol layer is disposed in the application processor, the MAC layer and the physical layer are disposed in the control processor, and the application processor is connected to the control processor via an asynchronous communication interface;
wherein the application processor further comprises: a MAC adaptation circuit, configured to add corresponding first network identifier information to the IP protocol data unit from the protocol layer; and a first multiplexing circuit, configured to transmit the IP protocol data unit with the corresponding first network identifier information to the control processor via the asynchronous communication interface; and
wherein the control processor further comprises: a second multiplexing circuit, configured to, according to the first network identifier information carried in the IP protocol data unit from the asynchronous communication interface, transmit the IP protocol data unit from the asynchronous communication interface to the corresponding MAC sublayer, so that the corresponding MAC sublayer encapsulates the IP protocol data unit into the corresponding MAC protocol data unit according to the corresponding low-data-rate wireless communication protocol.

Optionally, the first network identifier information is stored in a first message primitive handle field of the IP protocol data unit.

Optionally, the MAC transmission layer is configured to transmit the MAC protocol data unit from the physical layer to the corresponding MAC sublayer in the MAC layer, according to second network identifier information carried in the MAC protocol data unit, so that the corresponding MAC sublayer decapsulates the MAC protocol data unit into the corresponding IP protocol data unit according to the corresponding low-rate wireless communication protocol; wherein the second multiplexing circuit is further configured to add corresponding third network identifier information to the IP protocol data unit from the corresponding MAC sublayer in the MAC layer, and transmit the IP protocol data unit with the third network identifier information to the control processor via the asynchronous communication interface;
wherein the first multiplexing circuit is further configured to transmit the received IP protocol data unit with the third network identifier information to the MAC adaptation circuit; and the MAC adaptation circuit is further configured to transmit the IP protocol data unit from the first multiplexing circuit to the corresponding sub-protocol layer according to the third network identifier information carried in the IP protocol data unit.

Optionally, the second network identifier information is stored in a personal area network identifier field of the MAC protocol data unit.

Optionally, the third network identifier information is stored in a second message primitive handle field of the IP protocol data unit.

Optionally, the communication device further comprising: an arbitration circuit, configured to, when a plurality of low-data-rate wireless communication networks of the communication device are all in an active state, evenly allocate communication time to the plurality of low-data-rate wireless communication networks according to a preset communication cycle.

Optionally, the arbitration circuit is further configured to, when a current communication cycle ends and a corresponding low-rate wireless communication network is still in a communication state, allocate a next communication cycle to a next low-data-rate wireless communication network after the corresponding low-data-rate wireless communication network completes communication.

Optionally, the MAC layer and the physical layer are respectively based on an IEEE 802.15.4 protocol, and the plurality of sub-protocol layers comprise a Thread protocol layer and a Zigbee protocol layer.

Correspondingly, the embodiments of the present disclosure also provide a communication method, comprising:
generating, by a plurality of sub-protocol layers in a protocol layer, an IP protocol data unit respectively based on a corresponding low-rate wireless communication protocol among a plurality of low-data-rate wireless communication protocols, and transmitting the IP protocol data unit;
performing, by a MAC transmission layer and a plurality of MAC sublayers in a MAC layer arranged in one-to-one correspondence with the plurality of sub-protocol layers, conversion and transmission between the IP protocol data unit and a MAC protocol data unit respectively based on a corresponding low-rate wireless communication protocol among the plurality of low-data-rate wireless communication protocols; and
performing, by a physical layer, conversion and transmission between the MAC protocol data unit and a physical layer protocol data unit based on a corresponding low-rate wireless communication protocol among the plurality of low-data-rate wireless communication protocols.

Correspondingly, the embodiments of the present disclosure also provide a communication system, comprising a communication device as described in any of the preceding embodiments.

Correspondingly, the embodiments of the present disclosure also provide a computer program product, comprising a computer program/ instruction, wherein when executed by a processor, the computer program/instruction is used to implement the communication method provided in the preceding embodiments.

Correspondingly, the embodiments of the present disclosure also provide a storage medium, wherein the storage medium stores one or more computer instructions, wherein the one or more computer instructions are used to implement the communication method provided in the preceding embodiments.

Compared with the prior art, the technical solutions in the embodiments of the present disclosure have the advantages as follows:
The communication device provided in the embodiments of the present disclosure includes: a protocol layer including a plurality of sub-protocol layers, configured to respectively generate an Internet Protocol (IP) protocol data unit based on a corresponding low-rate wireless communication protocol among a plurality of low-rate wireless communication protocols, and transmit the IP protocol data unit; a Medium Access Control (MAC) layer including a MAC transmission layer and a plurality of MAC sublayers arranged in one-to-one correspondence with the plurality of sub-protocol layers, configured to respectively perform conversion and transmission between the IP protocol data unit and a MAC protocol data unit based on a corresponding low-rate wireless communication protocol among the plurality of low-rate wireless communication protocols; and a physical layer, configured to perform conversion and transmission between the MAC protocol data unit and a physical layer protocol data unit based on a corresponding low-rate wireless communication protocol among the plurality of low-rate wireless communication protocols.

The communication device provided in the embodiments of the present disclosure can transmit data based on multiple low-data-rate wireless communication protocols, enabling the coexistence of multiple short-range low-data-rate wireless communication networks in the same communication device, thus meeting the diverse communication needs of users.

### BRIEF DESCRIPTION OF THE DRAWINGS

FIG. 1 shows a schematic diagram of the communication device according to an embodiment of the present disclosure;
FIG. 2 shows a schematic diagram of the data structure of the IP protocol data unit generated by the communication device according to an embodiment of the present disclosure;
FIG. 3 shows a flowchart of the communication method according to an embodiment of the present disclosure; and
FIG. 4 shows a schematic diagram of an optional hardware structure of the device according to an embodiment of the present disclosure.

### DETAILED DESCRIPTION

As is known from the background, current communication devices cannot achieve the coexistence of multiple short-range low-data-rate wireless communication networks.

To solve the above-mentioned technical problem, the communication device provided in the embodiments of the present disclosure includes: a protocol layer including a plurality of sub-protocol layers, configured to respectively generate an Internet Protocol (IP) protocol data unit based on a corresponding low-rate wireless communication protocol among a plurality of low-rate wireless communication protocols, and transmit the IP protocol data unit; a Medium Access Control (MAC) layer including a MAC transmission layer and a plurality of MAC sublayers arranged in one-to-one correspondence with the plurality of sub-protocol layers, configured to respectively perform conversion and transmission between the IP protocol data unit and a MAC protocol data unit based on a corresponding low-rate wireless communication protocol among the plurality of low-rate wireless communication protocols; and a physical layer, configured to perform conversion and transmission between the MAC protocol data unit and a physical layer protocol data unit based on a corresponding low-rate wireless communication protocol among the plurality of low-rate wireless communication protocols.

The communication device provided in the embodiments of the present disclosure can transmit data based on multiple low-data-rate wireless communication protocols, enabling the coexistence of multiple short-range low-data-rate wireless communication networks in the same communication device, thus meeting the diverse communication needs of users.

To make the above-mentioned objects, features and advantages of the present disclosure more apparent and understandable, specific embodiments of the present disclosure will be described in detail below with reference to the accompanying drawings.

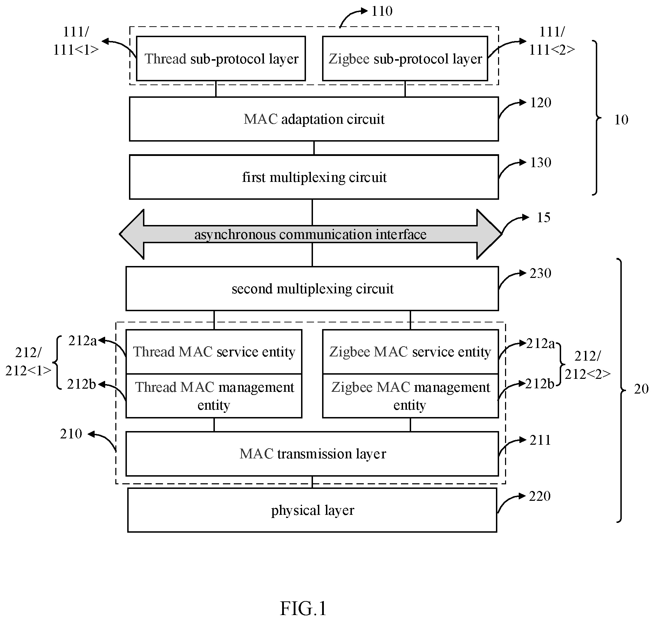

FIG. 1 shows a schematic diagram of the communication device according to an embodiment of the present disclosure. Referring to FIG. 1, a communication device includes: a protocol layer 110, including multiple sub-protocol layers 111, configured to respectively generate an IP Protocol Data Unit (IPPDU) based on a corresponding low-data-rate wireless communication protocol among multiple low-data-rate wireless communication protocols, and transmit the IP Protocol Data Unit; a MAC layer 210, including a MAC transmission layer 211 and multiple MAC sublayers 212 arranged in one-to-one correspondence with the multiple sub-protocol layers 111, configured to respectively perform the conversion and transmission between the IP Protocol Data Unit and the MAC Protocol Data Unit (MPDU) based on a corresponding low-data-rate wireless communication protocol among multiple low-data-rate wireless communication protocols; and a physical layer 220, configured to perform the conversion and transmission between the MAC Protocol Data Unit and the Physical Layer Protocol Data Unit (PPDU) based on a corresponding low-data-rate wireless communication protocol among multiple low-data-rate wireless communication protocols.

The communication device is a terminal that supports communication functions. Specifically, the terminal can refer to various forms of user equipment (UE), access terminal, user unit, user station, mobile station (MS), remote station, remote terminal, mobile device, user terminal, wireless communication equipment, user agent, or user device that support communication functions. The terminal can also be a cellular phone, cordless phone, Session Initiation Protocol (SIP) phone, Wireless Local Loop (WLL) station, Personal Digital Assistant (PDA), handheld device with wireless communication functions, computing device or other processing device connected to a wireless modem, vehicle-mounted device, wearable device, terminal in a future 5th-generation (5G) network, or a terminal in a future evolved Public Land Mobile Network (PLMN), etc., and the present disclosure does not limit this.

The protocol layer 110 is configured to generate the IP Protocol Data Unit (IPPDU) based on multiple low-data-rate wireless communication protocols, and transmit the IP Protocol Data Unit. Specifically, the protocol layer 110 is configured to respectively generate the corresponding IP protocol data unit based on the corresponding low-data-rate wireless communication protocol among a plurality of low-data-rate wireless communication protocols, and transmit the generated IP protocol data unit downwards, and is also configured to receive the IP protocol data unit from the MAC layer.

In some exemplary embodiments, the plurality of low-data-rate wireless communication protocols include the Thread protocol and the Zigbee protocol. Accordingly, the protocol layer 110 includes a Thread sub-protocol layer 111<1> and a Zigbee sub-protocol layer 111<2>.

The Thread and Zigbee protocols are widely used low-power wireless communication protocols in the Internet of Things (IoT), each serving different application scenarios and performance requirements. Specifically, the Zigbee protocol is a network protocol based on the IEEE 802.15.4 standard, primarily used for low-power, low-cost, and short-range wireless communication; the Thread protocol is an IPv6-based routing protocol built on top of Zigbee, designed specifically for low-power and battery-powered IoT devices, aiming to provide a higher level of network functionality and interoperability.

The Thread sub-protocol layer 111<1>, also known as the Thread network layer, is used to generate the corresponding IP protocol data unit based on the Thread protocol and transmit it downwards to the MAC layer 210, and is also used to receive the IP protocol data unit based on the Thread protocol from the MAC layer 210.

The Zigbee sub-protocol layer 111<2>, also known as the Zigbee network layer, is used to generate the corresponding IP protocol data unit based on the Zigbee protocol and transmit it downwards to the MAC layer 210. It is also used to receive the IP protocol data unit based on the Zigbee protocol from the MAC layer 210.

The MAC layer 210 is used to respectively perform the conversion and transmission between the IP protocol data unit and the MAC protocol data unit (MPDU) based on multiple low-data-rate wireless communication protocols.

Specifically, the MAC layer 210 can receive the IP protocol data unit from the upper protocol layer 110, encapsulate the received IP protocol data unit into MAC protocol data unit based on the corresponding low-data-rate wireless communication protocol, and transmit it downwards to the physical layer 220. It is also used to receive the MAC protocol data unit from the physical layer, decapsulate the MAC protocol data unit from the physical layer into IP protocol data unit based on the corresponding low-data-rate wireless communication protocol, and transmit it upwards to the protocol layer 110.

In some exemplary embodiments, the MAC layer 210 is based on the IEEE 802.15.4 protocol. Accordingly, the MAC layer 210 includes a MAC transmission layer 211 and a plurality of MAC sublayers 212 arranged in one-to-one correspondence with the plurality of sub-protocol layers 111. The plurality of MAC sublayers 212 respectively perform the transmission of MAC protocol data units (or data frames) between devices using services provided by the physical layer based on corresponding low-data-rate wireless communication protocols. The MAC transmission layer 211, based on the MAC sublayers 212, provides connection-oriented and connectionless services between devices.

In some exemplary embodiments, the plurality of MAC sublayers 212 respectively include a MAC service entity 212a and a MAC management entity 212b. The MAC service entity 212a provides MAC layer data services to ensure correct reception of MAC protocol data units at the physical layer; the MAC management entity 212b, also known as a MAC subLayer Management Entity (MLME), maintains a database storing MAC sublayer protocol state-related information.

The MAC transmission layer 211, also known as the Logical Link Control (LLC) sublayer, is used to provide connection-oriented and connectionless services between devices based on the MAC sublayers 212. It is responsible for media-independent logical control, such as error detection and flow control, and provides a unified service interface for upper-layer protocols.

The physical layer 220 is used to perform the conversion and transmission between MAC protocol data units and physical layer protocol data units (PPDUs) based on multiple low-data-rate wireless communication protocols.

In some exemplary embodiments, the physical layer 220 is a physical layer based on the IEEE 802.15.4 protocol. Accordingly, the physical layer 220 can be used to enable and disable the wireless transceiver, power detection (ED), link quality detection (LQI), idle channel assessment (CCA), channel selection, and data transmission.

Referring to FIG. 1, in some exemplary embodiments, the communication device includes an application processor (AP) 10 and a control processor (CP) 20. The plurality of protocol layers 110 are disposed within the application processor 10, and the MAC layer 210 and the physical layer 220 are disposed within the control processor 20. The application processor 10 and the control processor 20 are connected via an asynchronous communication interface 15. Exemplarily, the asynchronous communication interface 15 is a Universal Asynchronous Receiver/Transmitter (UART) interface.

The application processor 10 and the control processor 20 are coupled to each other through a single asynchronous communication interface 15. Therefore, to ensure that the IP protocol data units generated by each sub-protocol layer 111 in protocol layer 110 can be correctly transmitted down to the corresponding MAC sublayer 212 in MAC layer 210, corresponding first network identifier information can be added to the IP protocol data units generated by each sub-protocol layer 111.

Correspondingly, the application processor 10 also includes a MAC adaptation circuit 120 and a first multiplexing circuit 130. The MAC adaptation circuit 120 is used to add corresponding first network identifier information to the IP protocol data units from protocol layer 110; the first multiplexing circuit 130 is used to transmit the IP protocol data units with the corresponding added first network identifier information to the control processor 20 via the asynchronous communication interface 15.

The first network identifier is used to distinguish IP protocol data units from multiple low-data-rate wireless communication networks. Accordingly, the first network identifier has multiple values corresponding one-to-one with the multiple low-data-rate wireless communication networks, and the values of the first network identifier corresponding to each of the multiple low-data-rate wireless communication networks are different.

In some exemplary embodiments, the multiple low-data-rate wireless communication networks include Thread networks and Zigbee networks, and the protocol layer 110 correspondingly includes a Thread sub-protocol layer 111<1> and a Zigbee sub-protocol layer 111<2>. Accordingly, the value of the first network identifier can be a first value and a second value, wherein the first value of the first network identifier indicates that the IP protocol data unit comes from the Thread sub-protocol layer 111<1>; and the second value of the first network identifier indicates that the IP protocol data unit comes from the Zigbee sub-protocol layer 111 <2>. As an example, the first value and the second value are 0 and 1, respectively.

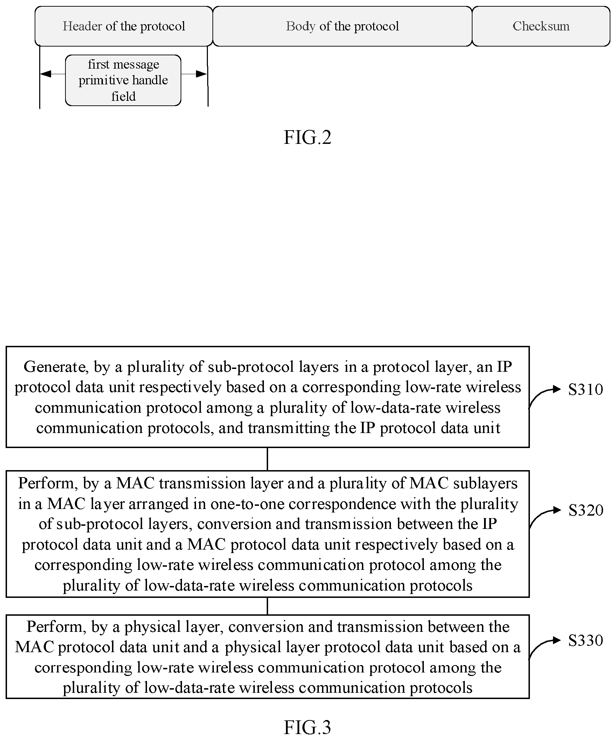

Refer to FIG. 2, which shows the composition structure of the IP protocol data unit after the corresponding first network identifier information is added by the MAC adaptation circuit 120. The IP protocol data unit specifically includes a header, a body, and a checksum. The first network identifier information is stored in the header of the IP protocol data unit, specifically in the first message primitive handle field of the header.

The length of the first message primitive handle field can be set according to actual needs. Specifically, the length of the first message primitive handle field can be set according to the need to distinguish IP protocol data units from different sub-protocol layers 111.

As an example, protocol layer 110 correspondingly includes a Thread sub-protocol layer 111<1> and a Zigbee sub-protocol layer 111<2>, and the length of the message primitive handle field is 1 byte correspondingly.

Accordingly, the control processor 20 further includes a second multiplexing circuit 230, configured to transmit the IP protocol data unit from the asynchronous communication interface 15 to a corresponding MAC sublayer 212 based on the first network identifier information carried by the IP protocol data unit from the asynchronous communication interface 15, so that the corresponding MAC sublayer 212 encapsulates the IP protocol data unit into a corresponding MAC protocol data unit according to a corresponding low-data-rate wireless communication protocol.

In some exemplary embodiments, the protocol layer 110 includes a Thread sub-protocol layer 111<1> and a Zigbee sub-protocol layer 111<2>. Accordingly, when the second multiplexing circuit 230 receives an IP protocol data unit transmitted from the asynchronous communication interface 15, it parses the received IP protocol data unit to obtain the corresponding first network identifier information. If, based on the parsed first network identifier information, the received IP protocol data unit originates from the Thread sub-protocol layer 111<1>, it transmits the received IP protocol data unit to the MAC sublayer 212<1> of the Thread network; if, based on the parsed first network identifier information, the received IP protocol data unit originates from the Zigbee sub-protocol layer 111 <2>, it transmits the received IP protocol data unit to the MAC sublayer 212<2> of the Zigbee network.

Therefore, by adding the corresponding first network identifier information to the IP protocol data unit from protocol layer 110 using the MAC adaptation circuit 120, the IP protocol data unit can be correctly transmitted from sub-protocol layer 111 to the corresponding MAC sublayer 212.

It is understood that the communication device, in addition to supporting data transmission to the outside world, can also receive air packets from the outside world. The communication device can operate in different low-data-rate wireless communication networks. Therefore, to achieve correct reception of air packets from different low-data-rate wireless communication networks, the correct transmission of air packets within the communication device can be achieved based on the second network identifier information carried in the received air packets.

Specifically, in the control processor 20, when receiving air packets transmitted by other devices, the physical layer 220 converts the received air packets into corresponding MAC protocol data units, wherein the corresponding MAC protocol data unit carries information of the second network identifier.

The second network identifier is used to distinguish MAC protocol data units from multiple low-data-rate wireless communication networks. Accordingly, the second network identifier has multiple values corresponding one-to-one with multiple low-data-rate wireless communication networks, and the values of the second network identifier corresponding to different low-data-rate wireless communication network are different from each other.

The second network identifier field can have a corresponding data length according to actual needs. Specifically, the data length of the second network identifier field can be set according to the need to distinguish MAC layer data units from different low-data-rate wireless communication networks.

In some exemplary embodiments, the plurality of low-data-rate wireless communication networks include a Thread network and a Zigbee network, and the MAC layer 210 correspondingly includes a Thread MAC sublayer 212<1> and a Zigbee MAC sublayer 212<2>. Accordingly, the value of the second network identifier can be a third value and a fourth value. Where the value of the second network identifier is the third value, it indicates that the received MAC protocol data unit comes from the Thread network and is used for upward transmission to the Thread MAC sublayer 212<1>; where the value of the second network identifier is the fourth value, it indicates that the received MAC protocol data unit comes from the Zigbee network and is used for upward transmission to the Zigbee MAC sublayer 212<2>. For example, the third value and the fourth value are 0 and 1, respectively.

In some exemplary embodiments, the second network identifier information includes a Personal Area Network Identifier (PANID).

In some exemplary embodiments, the PANID is stored in the PANID field of the MAC protocol data unit.

Correspondingly, the MAC transmission layer 211 is configured to send the received MAC protocol data unit to the corresponding MAC sublayer 212 according to the second network identifier information carried in the MAC protocol data unit from the physical layer 220, so that the corresponding MAC sublayer 212 decapsulates the MAC protocol data unit into a corresponding IP protocol data unit according to the corresponding low-data-rate wireless communication protocol.

In some exemplary embodiments, the plurality of low-data-rate wireless communication networks include Thread networks and Zigbee networks, and the MAC layer 210 correspondingly includes a Thread MAC sublayer 212<1> and a Zigbee MAC sublayer 212<2>. Accordingly, when the MAC transmission layer 211 receives the MAC protocol data unit from the physical layer 130, it parses the received MAC protocol data unit to obtain the second network identifier information carried in the MAC protocol data unit; based on the parsed second network identifier information, it determines that the received MAC protocol data unit originates from the Thread network; when it is determined that the received MAC protocol data unit originates from the Thread network based on the parsed second network identifier information, it transmits the MAC protocol data unit from the physical layer 220 to the MAC sublayer 212<1> of the Thread network; when it is determined that the received MAC protocol data unit originates from the Zigbee network based on the parsed second network identifier information, it transmits the MAC protocol data unit from the physical layer 220 to the MAC sublayer 212<2> of the Zigbee network.

When the MAC sublayer 212<1> of the Thread network and the MAC sublayer 212<2> of the Zigbee network receive the MAC protocol data unit from the MAC transmission layer 211, they respectively decapsulate the received MAC protocol data unit to obtain the corresponding IP protocol data unit.

It should be noted that after the MAC protocol data unit is decapsulated by the MAC sublayer 212<1> of the Thread network and the MAC sublayer 212<2> of the Zigbee network, the second network identifier information will be removed. In other words, the IP protocol data unit transmitted upwards from the MAC sublayer 212<1> of the Thread network and the MAC sublayer 212<2> of the Zigbee network to the second multiplexing circuit 230 will not carry information about its low-data-rate wireless communication network.

Correspondingly, the second multiplexing circuit 230 is also used to, upon receiving an IP protocol data unit from the MAC sublayer, add corresponding third network identifier information to the IP protocol data unit from the MAC sublayer according to the information of the MAC sublayer transmitting the IP protocol data unit, and transmit the IP protocol data unit with the added third network identifier information to the application processor 10 via the asynchronous communication interface 15.

The second multiplexing circuit 230 adds corresponding third network identifier information to the IP protocol data units from the MAC sublayer 212, providing a foundation for the correct upward transmission of the IP protocol data units.

In some exemplary embodiments, the third network identifier is used to distinguish IP protocol data units from multiple low-data-rate wireless communication networks. Accordingly, the third network identifier has multiple values corresponding one-to-one with the multiple low-data-rate wireless communication networks, and the values of the third network identifier corresponding to each of the multiple low-data-rate wireless communication networks are different from each other.

In some exemplary embodiments, the multiple low-data-rate wireless communication networks include a Thread network and a Zigbee networks, and the MAC layer 210 correspondingly includes a Thread MAC sublayer 212<1> and a Zigbee MAC sublayer 212<2>. Accordingly, when the IP protocol data unit originates from Thread MAC sublayer 212<1>, the second multiplexing circuit 230 adds a fifth value to the corresponding IP protocol data unit as the third network identifier; when the IP protocol data unit originates from Zigbee MAC sublayer 212<2>, the second multiplexing circuit 230 adds a sixth value to the corresponding IP protocol data unit as the third network identifier. As an example, the fifth and sixth values are 0 and 1, respectively.

In some exemplary embodiments, the third network identifier information is stored in the second message primitive handle field of the protocol header of the IP protocol data unit. For details regarding the second message primitive handle field, please refer to the aforementioned content regarding the first message primitive handle field; it will not be repeated here.

In the application processor 10, upon receiving an IP protocol data unit sent by the asynchronous communication interface 15, the first multiplexing circuit 130 is further configured to transmit the received IP protocol data unit with the added third network identifier information to the MAC adaptation circuit 130.

After receiving an IP protocol data unit with added third network identifier information, the first multiplexing circuit 130 transmits the IP protocol data unit with added third network identifier information upward to the MAC adaptation circuit 130.

Upon receiving the IP protocol data unit with added third network identifier information transmitted from the first multiplexing circuit 130, the MAC adaptation circuit 130, based on the third network identifier information in the IP protocol data unit from the first multiplexing circuit 130, transmits the IP protocol data unit from the first multiplexing circuit to the corresponding sub-protocol layer 111.

In some exemplary embodiments, the plurality of low-data-rate wireless communication networks include a Thread network and a Zigbee network, and the protocol layer 110 correspondingly includes a Thread sub-protocol layer 111<1> and a Zigbee sub-protocol layer 111<2>. Accordingly, the MAC adaptation circuit 120, by parsing the IP protocol data unit, determines that the IP protocol data unit originates from the Thread network, i.e., from the Thread MAC sublayer 212<1>, and then transmits the IP protocol data unit upwards to the Thread sub-protocol layer 111<1>; the MAC adaptation circuit 120, by parsing the IP protocol data unit, determines that the IP protocol data unit originates from the Zigbee network, i.e., from the Zigbee MAC sublayer 212<2>, and then transmits the IP protocol data unit upwards to the Zigbee sub-protocol layer 111<2>.

Thus, air packets from other devices are successfully transmitted upwards within the communication device.

It should also be noted that the communication device can operate in different low-data-rate wireless communication networks. Therefore, to ensure correct reception of air packets from different low-data-rate wireless communication networks, the correct upward transmission of the air packets can be achieved by utilizing the second network identifier information carried in the air packets.

Correspondingly, the communication device further includes an arbitration unit (not shown), used to evenly allocate communication time to the plurality of low-rate wireless communication networks according to a preset communication cycle when a plurality of low-data-rate wireless communication networks of the communication device are all in an active state.

Allocating the communication time evenly to the plurality of low-data-rate wireless communication networks according to a preset communication cycle means dividing the communication time into multiple communication cycles and distributing the resulting multiple communication cycles equally among the multiple low-data-rate wireless communication networks.

It should be noted that when the multiple low-data-rate wireless communication networks communicate using corresponding communication cycles, the end time of the current communication may be later than the end time of the current communication cycle. In other words, the corresponding low-data-rate wireless communication network may still be in a communication state at the end of the corresponding communication cycle.

Accordingly, the arbitration unit is further configured to, when a current communication cycle ends and a corresponding low-rate wireless communication network is still in a communication state, allocate a next communication cycle to a next low-data-rate wireless communication network after the corresponding low-rate wireless communication network completes communication.

By allocating the next communication cycle to the next low-data-rate wireless communication network after the corresponding low-data-rate wireless communication network completes communication, when the current communication cycle ends and the corresponding low-data-rate wireless communication network is still in a communication state, the arbitration unit can ensure the communication integrity of the multiple low-data-rate wireless communication networks, which is beneficial to improving the communication quality of the communication device.

In some exemplary embodiments, the plurality of low-data-rate wireless communication networks include a Thread network and a Zigbee network. Accordingly, the arbitration unit obtains information about the current communication network of the communication device; if the current communication network of the communication device is a Thread network, and the Thread network is still in a communication state at the end of the current communication cycle, then at the end of the current communication of the Thread network, the next communication cycle is allocated to the Zigbee network, that is, at the end of the current communication of the Thread network, the communication device switches its communication network from the Thread network to the Zigbee network; if the current communication network of the communication device is a Zigbee network, that is, the current communication cycle is the communication time of the Zigbee network, and if the Zigbee network is still in a communication state at the end of the current communication cycle, then at the end of the current communication of the Zigbee network, the next communication cycle is allocated to the Thread network.

Correspondingly, the embodiments of the present disclosure also provide a communication method. Referring to FIG. 3, the communication method includes:
Step S310: Generate, by a plurality of sub-protocol layers in a protocol layer, an IP protocol data unit respectively based on a corresponding low-rate wireless communication protocol among a plurality of low-data-rate wireless communication protocols, and transmitting the IP protocol data unit;
Step S320: Perform, by a MAC transmission layer and a plurality of MAC sublayers in a MAC layer arranged in one-to-one correspondence with the plurality of sub-protocol layers, conversion and transmission between the IP protocol data unit and a MAC protocol data unit respectively based on a corresponding low-rate wireless communication protocol among the plurality of low-data-rate wireless communication protocols;
Step S330: Perform, by a physical layer, conversion and transmission between the MAC protocol data unit and a physical layer protocol data unit based on a corresponding low-rate wireless communication protocol among the plurality of low-data-rate wireless communication protocols.

The communication method in the embodiments of the present disclosure can be executed by the aforementioned communication device, or other functional modules can be used to execute the communication method provided in the embodiments of the present disclosure. For a detailed description of the communication device, please refer to the foregoing section; it will not be repeated here.

Correspondingly, the embodiments of the present disclosure also provide a communication system, including the communication device provided in the embodiments of the present disclosure.

Correspondingly, the embodiments of the present disclosure also provide a computer device, which can implement the communication method provided in the embodiments of the present disclosure by loading the above-described communication method in the form of a program.

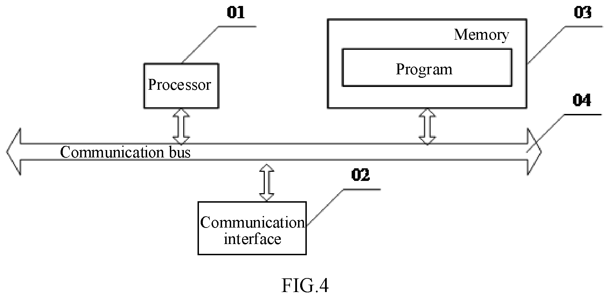

Referring to FIG. 4, a schematic diagram of an optional hardware structure of a computer device according to an embodiment of the present disclosure is shown. In some embodiments, the computer device includes: at least one processor 01, at least one communication interface 02, at least one memory 03, and at least one communication bus 04.

In some embodiments, the number of processor 01, communication interface 02, memory 03, and communication bus 04 is at least one, and the processor 01, communication interface 02, and memory 03 communicate with each other through communication bus 04.

Communication interface 02 can be an interface of a communication module for network communication, such as the interface of a GSM module.

Processor 01 may be a central processing unit (CPU), an application-specific integrated circuit (ASIC), or one or more integrated circuits configured to implement the communication method of this embodiment.

Memory 03 may include high-speed RAM and may also include non-volatile memory, such as at least one disk storage device. Memory 03 stores one or more computer instructions, which are executed by processor 01 to implement the communication method provided in the foregoing embodiments.

It should be noted that the above-described implementing computer device may also include other devices (not shown) that may not be essential to understanding the content disclosed in the embodiments of the present disclosure; given that these other devices may not be essential for understanding the content disclosed in the embodiments of the present disclosure, they are not described one by one.

Accordingly, embodiments of the present disclosure also provide a computer program product, including a computer program/instruction, which, when executed by a processor, are used to implement the communication method described in the embodiments of the present disclosure.

Embodiments of the present disclosure also provide a storage medium storing one or more computer instructions, which are used to implement the communication method provided in the foregoing embodiments.

The above-described embodiments of the present disclosure are combinations of elements and features of the present disclosure. Unless otherwise stated, elements or features may be considered optional. Individual elements or features may be practiced without combination with other elements or features. Furthermore, embodiments of the present disclosure may be constructed by combining some elements and/or features. The order of operations described in the embodiments of the present disclosure may be rearranged. Some constructions of any embodiment may be included in another embodiment and may be replaced by corresponding constructions of another embodiment. It will be apparent to those skilled in the art that claims in the appended claims that are not expressly referenced to each other may be combined to form embodiments of the present disclosure, or may be included as new claims in amendments made after the filing of this application.

Embodiments of the present disclosure may be implemented by various means, such as hardware, firmware, software, or combinations thereof. In a hardware configuration, the method according to exemplary embodiments of the present disclosure can be implemented using one or more application-specific integrated circuits (ASICs), digital signal processors (DSPs), digital signal processing devices (DSPDs), programmable logic devices (PLDs), field-programmable gate arrays (FPGAs), processors, controllers, microcontrollers, microprocessors, etc.

In a firmware or software configuration, embodiments of the present disclosure can be implemented in the form of modules, processes, functions, etc. Software code can be stored in memory units and executed by a processor. The memory units are located internally or externally to the processor and can send data to and receive data from the processor via various known means.

The above description of the disclosed embodiments enables those skilled in the art to implement or use the present disclosure. Various modifications to these embodiments will be readily apparent to those skilled in the art, and the general principles defined herein may be implemented in other embodiments without departing from the spirit or scope of the disclosure. Therefore, the present disclosure is not to be limited to the embodiments shown herein, but is accorded the widest scope consistent with the principles and novel features disclosed herein.

Although disclosed as above, the present disclosure is not limited to the foregoing description. A person skilled in the art can make various changes and modifications without departing from the spirit and the scope of the present disclosure. Thus, the scope of protection of the present disclosure should be subject to the scope defined by the claims.

## Claims

1. A communication device, comprising:
a protocol layer including a plurality of sub-protocol layers, configured to respectively generate an Internet Protocol (IP) protocol data unit based on a corresponding low-data-rate wireless communication protocol among a plurality of low-data-rate wireless communication protocols, and transmit the IP protocol data unit;
a Medium Access Control (MAC) layer including a MAC transmission layer and a plurality of MAC sublayers arranged in one-to-one correspondence with the plurality of sub-protocol layers, configured to respectively perform conversion and transmission between the IP protocol data unit and a MAC protocol data unit based on a corresponding low-data-rate wireless communication protocol among the plurality of low-rate wireless communication protocols; and
a physical layer, configured to perform conversion and transmission between the MAC protocol data unit and a physical layer protocol data unit based on a corresponding low-rate wireless communication protocol among the plurality of low-rate wireless communication protocols.

2. The communication device according to claim 1, wherein the communication device comprises an application processor and a control processor, wherein the protocol layer is disposed in the application processor, the MAC layer and the physical layer are disposed in the control processor, and the application processor is connected to the control processor via an asynchronous communication interface;
wherein the application processor further comprises: a MAC adaptation circuit, configured to add corresponding first network identifier information to the IP protocol data unit from the protocol layer; and a first multiplexing circuit, configured to transmit the IP protocol data unit with the corresponding first network identifier information to the control processor via the asynchronous communication interface; and
wherein the control processor further comprises: a second multiplexing circuit, configured to, according to the first network identifier information carried in the IP protocol data unit from the asynchronous communication interface, transmit the IP protocol data unit from the asynchronous communication interface to the corresponding MAC sublayer, so that the corresponding MAC sublayer encapsulates the IP protocol data unit into the corresponding MAC protocol data unit according to the corresponding low-data-rate wireless communication protocol.

3. The communication device according to claim 2, wherein the first network identifier information is stored in a first message primitive handle field of the IP protocol data unit.

4. The communication device according to claim 2, wherein the MAC transmission layer is configured to transmit the MAC protocol data unit from the physical layer to the corresponding MAC sublayer in the MAC layer, according to second network identifier information carried in the MAC protocol data unit, so that the corresponding MAC sublayer decapsulates the MAC protocol data unit into the corresponding IP protocol data unit according to the corresponding low-rate wireless communication protocol; wherein the second multiplexing circuit is further configured to add corresponding third network identifier information to the IP protocol data unit from the corresponding MAC sublayer in the MAC layer, and transmit the IP protocol data unit with the third network identifier information to the control processor via the asynchronous communication interface;
wherein the first multiplexing circuit is further configured to transmit the received IP protocol data unit with the third network identifier information to the MAC adaptation circuit; and the MAC adaptation circuit is further configured to transmit the IP protocol data unit from the first multiplexing circuit to the corresponding sub-protocol layer according to the third network identifier information carried in the IP protocol data unit.

5. The communication device according to claim 4, wherein the second network identifier information is stored in a personal area network identifier field of the MAC protocol data unit.

6. The communication device according to claim 4, wherein the third network identifier information is stored in a second message primitive handle field of the IP protocol data unit.

7. The communication device according to claim 1, further comprising: an arbitration circuit, configured to, when a plurality of low-data-rate wireless communication networks of the communication device are all in an active state, evenly allocate communication time to the plurality of low-data-rate wireless communication networks according to a preset communication cycle.

8. The communication device according to claim 7, wherein the arbitration circuit is further configured to, when a current communication cycle ends and a corresponding low-rate wireless communication network is still in a communication state, allocate a next communication cycle to a next low-data-rate wireless communication network after the corresponding low-data-rate wireless communication network completes communication.

9. The communication device according to any one of claims 1-8, wherein the MAC layer and the physical layer are respectively based on an IEEE 802.15.4 protocol, and the plurality of sub-protocol layers comprise a Thread protocol layer and a Zigbee protocol layer.

10. A communication method, comprising:
generating, by a plurality of sub-protocol layers in a protocol layer, an IP protocol data unit respectively based on a corresponding low-rate wireless communication protocol among a plurality of low-data-rate wireless communication protocols, and transmitting the IP protocol data unit;
performing, by a MAC transmission layer and a plurality of MAC sublayers in a MAC layer arranged in one-to-one correspondence with the plurality of sub-protocol layers, conversion and transmission between the IP protocol data unit and a MAC protocol data unit respectively based on a corresponding low-rate wireless communication protocol among the plurality of low-data-rate wireless communication protocols; and
performing, by a physical layer, conversion and transmission between the MAC protocol data unit and a physical layer protocol data unit based on a corresponding low-rate wireless communication protocol among the plurality of low-data-rate wireless communication protocols.

11. A communication system, comprising a communication device according to any one of claims 1-9.

12. A computer program product, comprising a computer program/instruction, wherein when executed by a processor, the computer program/instruction is used to implement the communication method according to claim 10.

13. A storage medium, wherein the storage medium stores one or more computer instructions, wherein the one or more computer instructions are used to implement the communication method according to claim 10.
